# EUROPÄISCHE PATENTSCHRIFT

(11) **EP 1 368 205 B1**
(45) Veröffentlichungstag und Bekanntmachung des Hinweises auf die Patenterteilung: **30.04.2008**
(21) Anmeldenummer: 02719897.7
(22) Anmeldetag: 22.02.2002
(51) Int. Cl.: B60G 7/00

(54) **LENKER FÜR EINE RADAUFHÄNGUNG**
LINK FOR A WHEEL SUSPENSION
BRAS DESTINE A UNE SUSPENSION DE ROUE

(30) Priorität: 05.03.2001 DE 10110492
(43) Veröffentlichungstag der Anmeldung: 10.12.2003
(73) Patentinhaber: Volkswagen Aktiengesellschaft, 38436 Wolfsburg (DE)
(72) Erfinder: RUHOLL, Herbert, 38114 Braunschweig (DE); GÜNTHER, Andreas, 38176 Wendeburg (DE); SCHOLZ, Hans-Werner, 38446 Wolfsburg (DE); ORTIZ, Sergio, 38102 Braunschweig (DE)
(86) Internationale Anmeldenummer: PCT/EP2002/001884
(87) Internationale Veröffentlichungsnummer: WO 2002/070290

(56) Entgegenhaltungen:
- EP-A- 0 739 762
- EP-A- 1 197 359
- DE-A- 19 923 699
- DE-U- 20 009 695
- US-A- 5 597 175

## Beschreibung

Die Erfindung bezieht sich auf einen Lenker für eine Radaufhängung, umfassend mindestens zwei Lagerelemente und ein einschaliges Verbindungselement, das die Lagerelemente miteinander verbindet.

Derartige Lenker werden beispielsweise als Querlenker in Mehrlenkerachsen oder Dreieckslenker in Federbeinachsen von Kraftfahrzeugen eingesetzt. Bei der Auslegung solcher Lenker sind eine Vielzahl von zum Teil widerstreitenden Zielen miteinander in Einklang zu bringen. Für eine möglichst leichtgewichtige Ausgestaltung ist es wünschenswert, den Lenker dünnwandig auszubilden oder Leichtbauwerkstoffe einzusetzen. Andererseits muß jedoch stets eine ausreichende Tragfähigkeit gewährleistet werden. Weiterhin ist zu berücksichtigen, daß der Lenker in einem eingebauten Zustand in einem Kraftfahrzeug während des Fahrbetriebs komplexen Belastungen unterworfen wird, wobei einzelne Bereiche stärker, andere hingegen schwächer beansprucht werden.

Im Hinblick auf ein möglichst geringes Gewicht und eine hohe Bauteilfestigkeit wird daher angestrebt, die Geometrie des Lenkers den auftretenden Belastungen anzupassen. Gerade durch die fertigungstechnischen Möglichkeiten sind hier jedoch deutliche Grenzen gesetzt. Diese liegen nicht allein im technologischen Bereich. Vielmehr sind im bei einer Serienfertigung vor allem wirtschaftliche Gesichtspunkte zu berücksichtigen, die sich in dem Erfordernis einer möglichst einfachen und kostengünstigen Herstellung widerspiegeln.

Aus dem Stand der Technik ist es bereits allgemein bekannt, Lenker als Guß- oder Schmiedeteile herzustellen. Ein als Gußteil ausgebildeter Lenker ist beispielsweise in der DE 199 23 699 A1 offenbart. Dieser bekannte Lenker ist einstückig ausgebildet und besteht aus einem im wesentlichen flächenhaften Träger, der an seinen Rändern verdickt ist. Im Querschnitt ergibt sich dadurch ein Doppel-T-Profil, das eine hohe Biegesteifigkeit besitzt. Das zur Herstellung dieses Lenkers verwendete Gießverfahren ermöglicht es, zugleich auch Lagerelemente in Form von Lageraugen einstückig mit dem flächenhaften Steg auszubilden. Damit wird ein Lenker geschaffen, der sich in großen Stückzahlen einfach herstellen läßt. Aus Gründen der Gewichtseinsparung wird dieser Lenker aus Leichtmetall hergestellt. Allerdings ergeben sich durch die Verwendung von Leichtmetall im Vergleich zu einem Lenker aus Stahl höhere Materialkosten. Wird jedoch anstelle von Leichtmetall Stahl oder Gußeisen eingesetzt, so führt dies zu einem deutlichen Gewichtsanstieg.

In der DE 199 23 699 A1 sind weiterhin Lenker erwähnt, die als zweischalige Blechkonstruktion ausgebildet sind. Dazu werden zwei Halbschalen, eine Oberschale und ein Unterschale, miteinander verschweißt, so daß ein Hohlkörper gebildet wird. Ein Beispiel für einen solchen zweischaligen Lenker ist in der DE 200 09 695 U1 angegeben. Der dort beschriebene Lenker ist als hohle Stahlkonfiguration aus teilweise gepreßten und miteinander verschweißten Stahlblechen gebildet und abschnittsweise mit einem die Knicksteifigkeit erhöhenden inneren Verstärkungsblech versehen. Diese Bauweise hat eine über die Halbschalen im wesentlichen gleichbleibende Wanddicke zufolge, wodurch der Lenker in manchen Bereichen überdimensioniert ist. Dies ist im Hinblick auf ein geringes Gewicht des Lenkers ungünstig. Durch die Verwendung des inneren Verstärkungsbleches können zwar die Halbschalen mit geringerer Wanddicke und damit leichter ausgebildet werden, jedoch führt die Befestigung des inneren Verstärkungsbleches zu einem Mehraufwand bei der Fertigung, da die Positionierung des Verstärkungsbleches mitunter Schwierigkeiten bereiten kann und bei einer schweißtechnischen Herstellung die Schweißstöße schwer zugänglich sind.

US 5597 175 offenbart eine H-förmige Verbundlenkerachse.

Vor diesem Hintergrund beabsichtigt die Erfindung, einen Lenker der eingangs genannten Art zu schaffen, der sich bei einem geringen Gewicht einfach und kostengünstig herstellen läßt.

Dazu wird ein Lenker der eingangs genannten Art vorgeschlagen, bei dem das Verbindungselement einen einstückigen Steg und mindestens einen Gurt umfaßt, der an einem Rand des Stegs befestigt ist, wobei der Steg im wesentlichen rechtwinklig an den Gurt angesetzt ist.

Mit einer solchen Konfiguration läßt sich gegenüber einer zweischaligen Konstruktion eine Verringerung des Gewichtes erzielen, da die einzelnen Teile des Verbindungselementes so besser beanspruchungskonform ausgelegt werden können.

Der einschalige Aufbau erlaubt überdies eine gute Zugänglichkeit zu den Verbindungsstellen zwischen dem Steg und den Gurten. Aus der Gewichts- und Materialeinsparung sowie der einfacheren Herstellbarkeit resultiert eine Verminderung der Herstellungskosten.

Im Vergleich zu einem hohlen Lenker ergibt sich durch die offene Form auch eine räumlich etwas kompaktere Bauweise. Zudem ist es möglich, die einzelnen Teile des Verbindungselementes aus unterschiedlichen Werkstoffen herzustellen.

In einer vorteilhaften Ausgestaltung der Erfindung weist das Verbindungselement im Querschnitt zumindest abschnittsweise ein T-Profil oder ein Doppel-T-Profil auf. Das Verbindungselement kann, zumindest abschnittsweise, auch als L-Profil oder U-Profil ausgebildet sein.

Der bzw. die Gurte können durchgehend oder auch unterbrochen ausgebildet werden. Vorzugsweise sind die Gurte jedoch jedenfalls so angeordnet, daß diese sich bis zu den Lagerelementen erstrecken, womit im Bereich um die Lagerelemente, das heißt an den Lagerstellen, eine hohe Steifigkeit erzielt wird. Weiterhin kann die Breite der Gurte entlang derselben konstant oder aber auch unterschiedlich sein.

In diesem Zusammenhang ist es weiterhin vorteilhaft, wenn im Bereich der Lagerelemente an beiden Rändern des Stegs jeweils ein Gurt befestigt ist. Damit ergibt sich an der betreffenden Lagerstelle im Querschnitt beispielsweise ein Doppel-T-Profil oder ein U-Profil.

In einer weiteren, vorteilhaften Ausgestaltung der Erfindung weisen der Steg und/oder die Gurte jeweils eine im wesentlichen konstante Wanddicke auf. Die einzelnen Teile des Verbindungselementes sind so besonders einfach herstellbar. Beispielsweise kann der Steg als eine im wesentlichen flache Platte ausgebildet werden. Die Gurte sind bevorzugt als schmale, bandförmige Streifen ausgebildet.

Durch die Verwendung von Tailored Blanks, insbesondere solchen mit Elementen unterschiedlicher Blechdicken, für den Steg und/oder die Gurte lassen sich bei nur leicht erhöhtem Aufwand weitere Gewichtseinsparungen erzielen.

Wie bereits oben erwähnt, erlaubt der Aufbau des Verbindungselementes aus mehreren Teilen eine Anpassung an die auftretenden Beanspruchungen. Neben einer gezielten Materialauswahl ist eine Anpassung vor allem auch über geometrische Größen der einzelnen Teile möglich. Insbesondere kann die Wanddicke der einzelnen Teile individuell auf die auftretenden Beanspruchungen abgestimmt werden. Dabei ist es nicht notwendig, daß sämtliche Gurte die gleiche Wanddicke besitzen. Beispielsweise können einzelne Gurte dünner oder auch dicker als der Steg ausgebildet sein.

Bevorzugt sind der Steg und die Gurte aus einem metallischen Werkstoff, insbesondere aus Stahl oder Leichtmetall, hergestellt. Vor allem bei der Verwendung von Leichtmetall lassen sich weitere Gewichtseinsparungen erzielen.

Prinzipiell kann der Steg als Gußteil oder Schmiedeteil ausgebildet sein. Vorzugsweise ist der Steg jedoch als im wesentlichen flaches Blechumformteil hergestellt.

Alternativ oder ergänzend ist es möglich, den Steg und/oder die Gurte aus einem Kunststoff oder einem Faserverbundwerkstoff herzustellen.

In einer weiteren, vorteilhaften Ausgestaltung weist der Lenker zwei Lagerelemente auf, die an das einschalige Verbindungselement angeschweißt sind. Das Verbindungselement ist dabei bogenförmig gekröpft. Weiterhin sind der Gurt bzw. die Gurte an den Steg angeschweißt.

In einer anderen, vorteilhaften Ausgestaltung weist der Steg eine grob dreieckige Grundform auf, deren Ecken als Lagerstellen und/oder Befestigungsstellen ausgebildet sind, wobei alle Ränder des Stegs zwischen den Lagerstellen und/oder Befestigungsstellen mit Gurten versehen sind.

Die Erfindung wird nachfolgend anhand von in der Zeichnung dargestellten Ausführungsbeispielen näher erläutert. Die Zeichnung zeigt in:
- Figur 1: ein erstes Ausführungsbeispiel eines Querlenkers nach der Erfindung in einer räumlichen Darstellung,
- Figur 2: eine Ansicht von oben auf den Querlenker aus Figur 1,
- Figur 3: eine Seitenansicht des Querlenkers aus Figur 1,
- Figur 4: eine weitere Seitenansicht des Querlenkers aus Figur 1,
- Figur 5: einen Schnitt durch das Verbindungselement des Querlenkers aus Figur 1 entlang der Linie V-V,
- Figur 6: ein zweites Ausführungsbeispiel eines Querlenkers nach der Erfindung in einer räumlichen Darstellung,
- Figur 7: einen Schnitt durch das Verbindungselement des Querlenkers aus Figur 6 entlang der Linie VII-VII,
- Figur 8: einen weiteren Schnitt durch das Verbindungselement des Querlenkers aus Figur 6 entlang der Linie VIII-VIII,
- Figur 9: ein Beispiel für eine weitere Querschnittform des Verbindungselementes des Querlenkers aus Figur 6, und in
- Figur 10: ein weiteres Beispiel für eine weitere Querschnittform des Verbindungselementes des Querlenkers aus Figur 6.

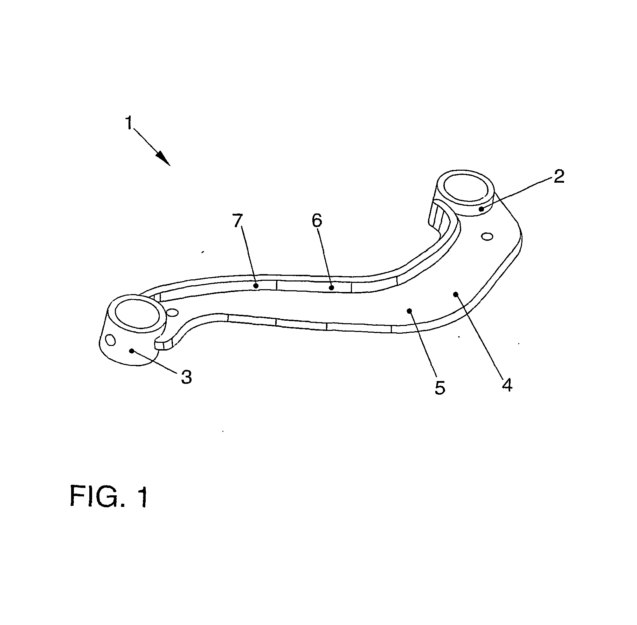

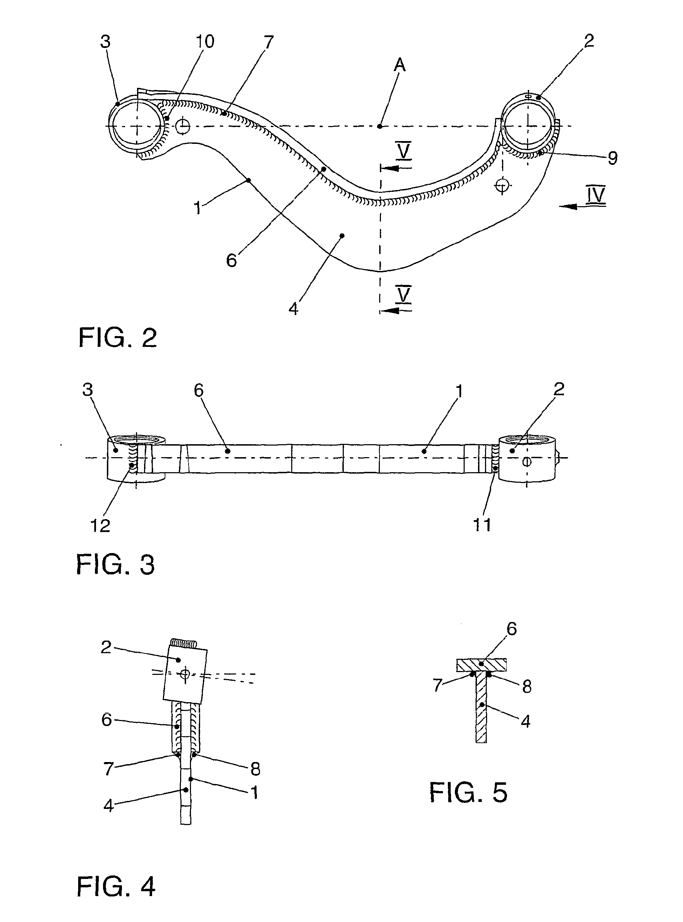

Das erste Ausführungsbeispiel in den Figuren 1 bis 5 zeigt einen Querlenker 1 für eine Radaufhängung eines Kraftfahrzeuges. Der Querlenker 1 besitzt zwei Lagerelemente 2 und 3, die über ein einschaliges Verbindungselement 4 miteinander verbunden sind. Die Lagerelemente 2 und 3 sind dabei jeweils als Buchsen mit einer Durchgangsöffnung ausgebildet. Die Durchgangsöffnung der Buchsen verläuft dabei jeweils im wesentlichen senkrecht zu der Haupterstreckungsebene des Verbindungselementes 4. Wie insbesondere Figur 2 zeigt, ist das Verbindungselement 4 in bezug auf eine die Lagerelemente 2 und 3 verbindende Achse A bogenförmig gekröpft, und zwar derart, daß wenigstens ein mittlerer Bereich zwischen den Lagerelementen 2 und 3 materialfrei ist.

Das einschalige Verbindungselement 4 umfaßt in dem ersten Ausführungsbeispiel einen in der Haupterstreckungsebene des Verbindungselementes 4 angeordneten Steg 5, der hier als im wesentlichen ebene, einstückige Platte ausgebildet ist und bei einer Ansicht von oben im wesentlichen die Grundform des Verbindungselementes 4 bestimmt. Dementsprechend weist der Steg 5 eine bogenförmig gekröpfte Grundform auf. Einander gegenüberliegende Endabschnitte des länglichen Stegs 5 sind jeweils zangenartige ausgebildet, um die Lagerelemente 2 und 3 teilweise zu umgreifen.

Weiterhin umfaßt das Verbindungselement 4 einen Gurt 6, der an einem Rand des Stegs 5 befestigt ist. Der Gurt 6 ist als schmaler, bandförmiger Streifen mit konstanter Breite ausgebildet. Die Breite ist dabei etwas geringer, als die Länge der Lagerelemente 2 und 3. Der Gurt 6 verläuft an der Innenseite der Kröpfung des Stegs 5 durchgehend von dem einen Lagerelement 2 zu dem anderen Lagerelement 3 und schmiegt sich dabei eng an den äußeren Rand des Stegs 5 an. Die Breitenrichtung des Gurtes 6 steht dabei senkrecht zu der Haupterstreckungsebene. Somit ist der Steg 5 rechtwinklig an den Gurt 6 angesetzt. Der gegenüberliegende, äußere Rand des Stegs 5 ist hingegen nicht mit einem Gurt versteift. Damit ergibt sich für das Verbindungselement 4 im Querschnitt ein T-Profil, wie dies in Figur 5 gezeigt ist.

Figur 5 ist weiter zu entnehmen, daß der Gurt 6 eine größere Wanddicke besitzt, als der Steg 5. Beide Teile des Verbindungselementes 4 sind als Blechteile ausgebildet, die jeweils eine einfache Form besitzen und daher kostengünstig herstellbar sind. Insbesondere ist hier der Steg 5 eine einfache Platte, die lediglich aus einem Blech ausgeschnitten oder ausgestanzt werden braucht.

Die Lagerelemente 2 und 3, der Steg 5 und der Gurt 6 sind miteinander verschweißt. Dazu kann beispielsweise wie nachfolgend beschrieben vorgegangen werden: zunächst werden die Lagerelemente 2 und 3 über Schweißnähte 7 und 8 mit den Endabschnitten des Stegs 5 verbunden. Anschließend wird der Gurt 6 angesetzt und mittels weiterer Schweißnähte 9 und 10 von oben und unten mit dem Steg 5 verschweißt. Abschließend werden die Enden des Gurtes 6 über Schweißnähte 11 und 12 mit den Lagerelementen 2 und 3 verbunden.

In einer abgewandelten Ausführungsform des ersten Ausführungsbeispiels ist der Steg 5, der auch ein Blechumformteil sein kann, an seinen beiden äußeren Rändern jeweils mit einem Gurt versehen, der sich von dem einen Lagerelement 2 durchgehend zu dem anderen Lagerelement 3 erstreckt. Auch in diesem Fall werden vorzugsweise zunächst die Lagerelemente 2 und 3 angeschweißt, bevor die Gurte befestigt werden.

Weiterhin ist in dem ersten Ausführungsbeispiel der Gurt 6 mit einer gleichmäßigen Breite und konstanten Wanddicke dargestellt. Auf diese Weise kann der Gurt 6 einfach, beispielsweise aus Bandmaterial, hergestellt werden. Zu einer weiteren Gewichtsoptimierung kann jedoch auch die Breite und Wanddicke des Gurtes 6 an die auftretenden Beanspruchungen angepaßt werden. Dies gilt sowohl bei einer Ausbildung des Verbindungselementes 4 mit einem T-Profil als auch mit einem Doppel-T-Profil. Weiterhin ist es möglich, einen oder auch beide Gurte zu unterbrechen. Zur Versteifung der Bereiche um die Lagerelemente 2 und 3 ist jedoch dort stets wenigstens ein Gurt vorgesehen.

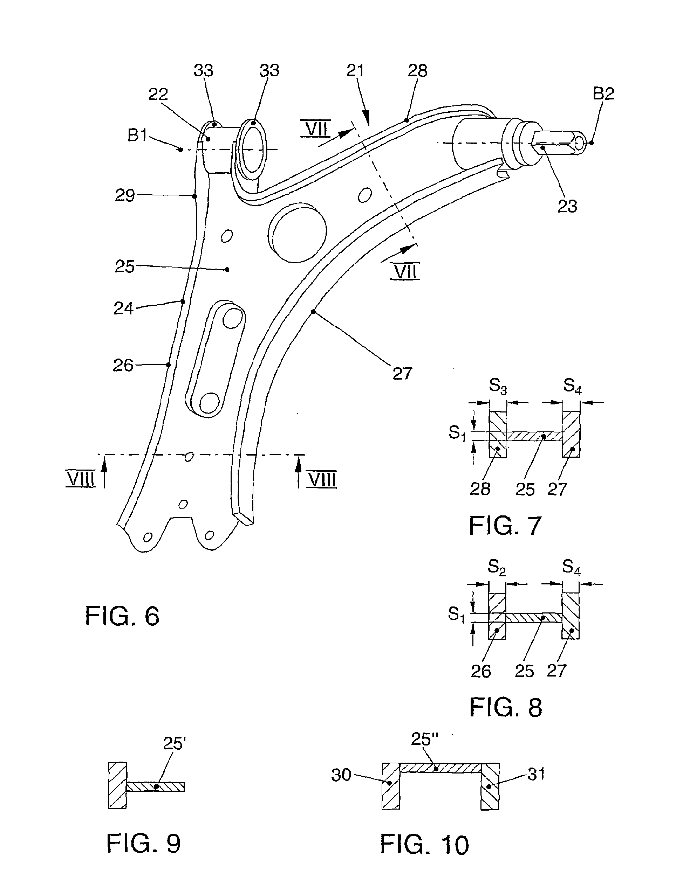

Zudem kann der Steg 5 in bezug auf den oder die Gurte in der Höhe verschoben werden, womit sich im Extremfall ein L-Profil oder U-Profil ergibt, wie dies in Figur 10 beispielhaft gezeigt ist.

Weiterhin ist es möglich, die Lagerelemente 2 und 3 lediglich an einander gegenüberliegenden Gurten, jedoch nicht an dem Steg 5 selbst zu befestigen.

Das zweite Ausführungsbeispiel in den Figuren 6 bis 8 zeigt einen weiteren Querlenker 21 mit zwei Lagerelementen 22 und 23 sowie einer zusätzlichen Befestigungsstelle, die über ein einschaliges Verbindungselement 24 miteinander verbunden sind. Im Unterschied zu dem ersten Ausführungsbeispiel verlaufen hier die Schwenkachsen B₁ und B₂ des ersten Lagerelementes 22 und zweiten Lagerelementes 23 im wesentlichen parallel zu der Haupterstreckungsebene des Verbindungselementes 24. Dabei sind die beiden Schwenkachsen B₁ und B₂ in etwa koaxial zueinander ausgerichtet. Zwischen den Lagerelementen 22 und 23 ist das Verbindungselement etwas eingezogen, wodurch ein Freiraum für das vordere Lager geschaffen wird.

Das Verbindungselement 24 weist bei einer Betrachtung von oben eine grob dreieckige Grundform auf, die im wesentlichen durch einen einstückigen Steg 25 festgelegt wird. An den Rändern des Stegs 25 sind zur Versteifung Gurte 26, 27 und 28 befestigt, die sich jeweils zwischen den Lager- bzw. Befestigungsstellen erstrecken. Wie in dem ersten Ausführungsbeispiel, so sind auch hier die Gurte 26, 27 und 28 jeweils durchgehend als schmale, bandförmige Streifen ausgebildet. Überdies weisen die Gurte 26, 27 und 28 jeweils eine konstante Dicke auf. Der Steg 25 setzt dabei rechtwinklig an die Gurte 26, 27 und 28 an.

Ein in bezug auf seine Einbausituation an einem Kraftfahrzeug vornliegender Gurt 26 ist mit einer dünneren Wanddicke ausgeführt, als ein diesem gegenüberliegender, d. h. hintenliegender Gurt 27. Letzterer besitzt in etwa die Dicke eines innenliegenden Gurtes 28, der sich zwischen den beiden Lagerelemente 22 und 23 erstreckt. Weiterhin entspricht die Wanddicke des Stegs 25 in etwa der Wanddicke des vornliegenden Gurtes 26. Unter Bezugnahme auf die Figuren 7 und 8 ergibt sich damit s₁^{~}s₂ und s₃, s₄ = s₁, s₂.

Prinzipiell ist jedoch je nach Beanspruchung des Querlenkers 21 jede Dickenkombination möglich. Überdies kann auch die Breite variiert werden. Zudem ist es möglich, einzelne Gurte wegzulassen oder lediglich teilweise, d. h. unterbrochen vorzusehen. In diesem Fall ergibt sich dann abschnittsweise anstelle eines Doppel-T-Profils ein einfaches T-Profil, wie in Figur 9 gezeigt.

Sowohl die Gurte 26, 27 und 28 als auch der Steg 25 sind als Blechumformteile ausgebildet und ähnlich wie in dem ersten Ausführungsbeispiel miteinander verschweißt. Wie Figur 6 zeigt, ist zur Befestigung des ersten Lagerelementes 22, das in Form einer Buchse mit endseitigen Kragen 33 ausgebildet ist, an den Gurten 26 und 28 jeweils eine bogenförmige Ausnehmung vorgesehen, welche die Buchse unterhalb des jeweiligen Kragens 33 teilweise umgreift. Insbesondere der schmalere, vornliegende Gurt 26 weist hierzu im Bereich um die Lagerstelle des ersten Lagerelementes 22 einen verbreiterten Abschnitt 29 auf.

In einer Abwandlung des zweiten Ausführungsbeispiels, die in Figur 10 dargestellt ist, ist die Lage des Stegs 25" gegenüber den Gurten 30 und 31 verschoben. In dem Beispiel ist der Extremfall für ein Doppel-T-Profil dargestellt, das zu einem U-Profil wird. Die Höhenverschiebung erlaubt es, den Schubmittelpunkt des Querlenkers 21 möglichst dicht an den Kraftangriffspunkt einer Radträgeranlenkung, die an der Befestigungsstelle 32 erfolgt, zu legen.

Die vorstehend beschriebenen Querlenker 1 und 21 sind jeweils als Blechkonstruktion ausgebildet, wobei hier vorzugsweise Stahlblechteile eingesetzt werden. Im Hinblick auf eine besonders leichtgewichtige Bauweise können einzelne Elemente des jeweiligen Querlenkers oder der gesamte Querlenker auch aus Leichtmetall, insbesondere einer Aluminium- oder Magnesiumlegierung ausgeführt werden. Der Steg 5 bzw. 25 kann dabei ein Guß- oder Schmiedeteil sein, an dem die Lagerelemente einstückig ausgeformt werden.

Eine weitere werkstofftechnische Alternative besteht in der Verwendung von Kunststoffen und Faserverbundwerkstoffen für den Steg und die Gurte.

In jeden Fall wird durch die Verwendung eines einschaligen Verbindungselementes, das aus einem einstückigen Steg und Gurten zusammengefügt ist, im Vergleich zu einer zweischaligen Konstruktion eine Verringerung des Gewichtes sowie eine Senkung der Materialkosten erzielt.

### BEZUGSZEICHENLISTE

- 1: Querlenker
- 2: Lagerelement
- 3: Lagerelement
- 4: Verbindungselement
- 5: Träger
- 6: Gurt
- 7: Schweißnaht
- 8: Schweißnaht
- 9: Schweißnaht
- 10: Schweißnaht
- 11: Schweißnaht
- 12: Schweißnaht
- 21: Querlenker
- 22: Lagerelement
- 23: Lagerelement
- 24: Verbindungselement
- 25, 25': Träger
- 26: vornliegender Gurt
- 27: hintenliegender Gurt
- 28: innenliegender Gurt
- 29: verbreiteter Abschnitt
- 30: Gurt
- 31: Gurt
- 32: Befestigungsstelle
- A: Achse
- B1, B2: Schwenkachse
- s1 bis s4: Wanddicke

## Patentansprüche

1. Querlenker für eine Radaufhängung umfassend mindestens zwei Lagerelemente (2. 3; 22, 23) und ein einschaliges Verbindungselement (4; 24), das die Lagerelemente (2, 3; 22, 23) miteinander verbindet, **dadurch gekennzeichnet, daß** das Verbindungselement (4; 24) einen einstückigen, die Lagerelemente (2, 3; 22, 23) verbindenden Steg (5; 25) und mindestens einen Gurt (6; 26, 27, 28) umfaßt, der an einem Rand des Stegs (5; 25) befestigt ist, wobei der Steg (5; 25) im wesentlichen rechtwinklig an den Gurt (6; 26,27, 28) angesetzt ist und der Gurt bzw. die Gurte (6; 26,27, 28) sich bis zu den Lagerelementen (2, 3; 22, 23) erstrecken.

2. Querlenker nach Anspruch 1, **dadurch gekennzeichnet, daß** das Verbindungselement (4; 24) im Querschnitt zumindest abschnittsweise ein T-Profil oder ein Doppel-T-Profll aufweist.

3. Querlenker nach Anspruch 1 oder 2, **dadurch gekennzeichnet, daß** das Verbindungselement (4; 24) im Querschnitt zumindest abschnittsweise ein L-Profil oder ein U-Profil aufweist.

4. Querlenker nach einem der Ansprüche 1 bis 3, **dadurch gekennzeichnet, daß** im Bereich der Lagerelemente (22, 23) an beiden Rändern des Stegs (25) jeweils ein Gurt (26, 27,28) befestigt ist.

5. Querlenker nach einem der Ansprüche 1 bis 4, **dadurch gekennzeichnet, daß** der Steg (5; 25) und/oder die Gurte (6; 26, 27, 28) jeweils eine im wesentlichen konstante Wanddicke aufweisen.

6. Querlenker nach einem der Ansprüche 1 bis 5, **dadurch gekennzeichnet, daß** wenigstens ein Gurt (6; 26, 27, 28) eine größere Wanddicke aufweist als der Steg (5; 25).

7. Querlenker nach einem der Ansprüche 1 bis 6, **dadurch gekennzeichnet**, der Steg (5; 26) und die Gurte (6; 26,27, 28) aus einem metallischen Werkstoff, insbesondere aus Stahl oder Leichtmetall, hergestellt sind.

8. Querlenker nach einem der Ansprüche 1 bis 7, **dadurch gekennzeichnet, daß** der Steg (5; 25) als im wesentlichen flaches Blechumformteil ausgebildet ist.

9. Querlenker nach einem der Ansprüche 1 bis 6, **dadurch gekennzeichnet, daß** der Steg und/oder die Gurte aus einem Kunststoff oder einem Faserverbundwerkstoff hergestellt sind,

10. Querlenker nach einem der Ansprüche 1 bis 9, **dadurch gekennzeichnet, daß** der Lenker (1) zwei Lagerelemente (2, 3) aufweist, die an das einschalige Verbindungselement (4) angeschweißt sind, daß das Verbindungselement (4) bogenförmig gekröpft ist, und daß der bzw. die Gurte (6) an den Steg (5) angeschweißt sind.

11. Querlenker nach einem der Ansprüche 1 bis 9, **dadurch gekennzeichnet, daß** der Steg (21) eine grob dreieckige Grundform aufweist, deren Ecken als Lagerstellen und/oder Befestigungsstellen ausgebildet sind, wobei alle Ränder des Stegs (25) zwischen den Lagerstellen und/oder Befestigungsstellen mit Gurten (26, 27, 28) versehen sind.

## Claims

1. Transverse link for a wheel suspension, comprising at least two mount elements (2, 3; 22, 23) and a single-shell connecting element (4; 24) which connects the mount elements (2, 3; 22, 23) to one another, **characterized in that** the connecting element (4; 24) comprises a single-piece web (5; 25) which connects the mount elements (2, 3; 22, 23) and at least one belt (6; 26, 27, 28) which is fastened to an edge of the web (5; 25), with the web (5; 25) being attached substantially at right angles to the belt (6; 26, 27, 28), and the belt or belts (6; 26, 27, 28) extending to the mount elements (2, 3; 22, 23).

2. Transverse link according to Claim 1, **characterized in that** the connecting element (4; 24) has a T-shaped profile or double-T-shaped profile in cross section at least in sections.

3. Transverse link according to Claim 1 or 2, **characterized in that** the connecting element (4; 24) has an L-shaped profile or a U-shaped profile in cross section at least in sections.

4. Transverse link according to one of Claims 1 to 3, **characterized in that** in each case one belt (26, 27, 28) is fastened to both edges of the web (25) in the region of the mount elements (22, 23).

5. Transverse link according to one of Claims 1 to 4, **characterized in that** the web (5; 25) and/or the belts (6; 26, 27, 28) have in each case a substantially constant wall thickness.

6. Transverse link according to one of Claims 1 to 5, **characterized in that** at least one belt (6; 26, 27, 28) has a greater wall thickness than the web (5; 25).

7. Transverse link according to one of Claims 1 to 6, **characterized in that** the web (5; 25) and the belts (6; 26, 27, 28) are produced from a metallic material, in particular from steel or light metal.

8. Transverse link according to one of Claims 1 to 7, **characterized in that** the web (5; 25) is formed as a substantially flat sheet metal shaped part.

9. Transverse link according to one of Claims 1 to 6, **characterized in that** the web and/or the belts are produced from a plastic or a fibre composite material.

10. Transverse link according to one of Claims 1 to 9, **characterized in that** the link (1) has two mount elements (2, 3) which are welded to the single-shell connecting element (4), **in that** the connecting element (4) is elbowed in the shape of an arc, and **in that** the belt(s) (6) are welded to the web (5).

11. Transverse link according to one of Claims 1 to 9, **characterized in that** the web (21) has a roughly triangular basic shape whose corners are embodied as mount points and/or fastening points, with all of the edges of the web (25) between the mount points and/or fastening points being provided with belts (26, 27, 28).

## Revendications

1. Bras destiné à une suspension de roue, comprenant au moins deux éléments de palier (2, 3 ; 22, 23) et un élément de liaison monocoque (4 ; 24) qui relie entre eux les éléments de palier (2, 3 ; 22, 23), **caractérisé en ce que** l'élément de liaison (4 ; 24) comprend une âme d'un seul tenant (5 ; 25) reliant les éléments de palier (2, 3 ; 22, 23) et au moins une semelle (6 ; 26, 27, 28) qui est fixée sur un bord de l'âme (5 ; 25), sachant que l'âme (5 ; 25) est rapportée essentiellement perpendiculairement à la semelle (6 ; 26, 27, 28) et que la ou les semelles (6 ; 26, 27, 28) s'étendent jusqu'aux éléments de palier (2, 3 ; 22, 23).

2. Bras selon la revendication 1, **caractérisé en ce que** l'élément de liaison (4 ; 24) présente, en coupe transversale, au moins sectoriellement un profil en T ou un profil en double T.

3. Bras selon la revendication 1 ou 2, **caractérisé en ce que** l'élément de liaison (4 ; 24) présente, en coupe transversale, au moins sectoriellement un profil en L ou un profil en U.

4. Bras selon l'une des revendications 1 à 3, **caractérisé en ce qu'**une semelle respective (26, 27, 28) est fixée sur chacun des deux bords de l'âme (25) dans la région des éléments de palier (22, 23).

5. Bras selon l'une des revendications 1 à 4, **caractérisé en ce que** l'âme (5 ; 25) et/ou les semelles (6 ; 26, 27, 28) présentent respectivement une épaisseur de paroi essentiellement constante.

6. Bras selon l'une des revendications 1 à 5, **caractérisé en ce qu'**au moins une semelle (6 ; 26, 27, 28) présente une plus grande épaisseur de paroi que l'âme (5 ; 25).

7. Bras selon l'une des revendications 1 à 6, **caractérisé en ce que** l'âme (5 ; 25) et les semelles (6 ; 26, 27, 28) sont fabriquées en un matériau métallique, notamment en acier ou en métal léger.

8. Bras selon l'une des revendications 1 à 7, **caractérisé en ce que** l'âme (5 ; 25) est réalisée sous la forme d'une pièce façonnée en tôle essentiellement plate.

9. Bras selon l'une des revendications 1 à 6, **caractérisé en ce que** l'âme et/ou les semelles sont fabriquées en un matériau plastique ou en un matériau composite renforcé par fibres.

10. Bras selon l'une des revendications 1 à 9, **caractérisé en ce que** le bras (1) présente deux éléments de palier (2, 3) qui sont soudées sur l'élément de liaison monocoque (4), **en ce que** l'élément de liaison (4) est contrecoudé en arc, et **en ce que** la ou les semelles (6) sont soudées sur l'âme (5).

11. Bras selon l'une des revendications 1 à 9, **caractérisé en ce que** l'âme (25) présente une forme de base grossièrement triangulaire dont les sommets sont conçus comme points de palier et/ou points de fixation, sachant que tous les bords de l'âme (25) entre les points de palier et/ou points de fixation sont pourvus de semelles (26, 27, 28).
